# EUROPÄISCHE PATENTANMELDUNG

(11) **EP 2 088 663 A2**
(43) Veröffentlichungstag der Anmeldung: **12.08.2009**
(21) Anmeldenummer: 09152155.9
(22) Anmeldetag: 05.02.2009
(51) Int. Cl.: H02K 5/15

(54) **Hohlwelleneinbaumotor zum Einbau in ein Gehäuse**

(30) Priorität: 05.02.2008 DE 102008007576
(71) Anmelder: Brose Fahrzeugteile GmbH & Co. Kommanditgesellschaft, Wuerzburg, 97076 Würzburg (DE)
(72) Erfinder: Buban, Tobias, 73733 Esslingen (DE); Glaab, Christian, 63743 Aschaffenburg (DE)
(74) Vertreter: Hassa, Oliver Michael

(57) **Zusammenfassung**

Die Erfindung betrifft einen Hohlwelleneinbaumotor, welcher einen Stator und einen Rotor aufweist, wobei der Rotor innerhalb des Stators drehbar zu diesem angeordnet ist, und welcher in seinen beiden axialen Endbereichen jeweils mit einem am Stator befestigten Lagerschild versehen ist. Im Stator sind mehrere in Umfangsrichtung des Stators voneinander beabstandete, in Axialrichtung verlaufende Nuten oder Bohrungen vorgesehen. Die Lagerschilde weisen jeweils in Axialrichtung verlaufende Fortsätze auf. Die Fortsätze der Lagerschilde greifen in die Nuten oder Bohrungen des Stators ein.

## Beschreibung

Die Erfindung betrifft einen Hohlwelleneinbaumotor, welcher einen Stator und einen Rotor aufweist, wobei der Rotor innerhalb des Stators drehbar zu diesem angeordnet ist, und welcher in seinen beiden axialen Endbereichen jeweils mit einem am Stator befestigten Lagerschild versehen ist. Derartige Hohlwelleneinbaumotoren sind im Allgemeinen zylinderförmig ausgebildet und können in Axialrichtung in ein zylinderförmiges Gehäuse eingesetzt und in bzw. an diesem befestigt werden.

Bei bekannten Einbaumotoren werden die Lagerschilde auf den mechanisch bearbeiteten Außenmantel des Statorpaketes gepresst. Diese mechanische Bearbeitung des Außenmantels des Statorpaketes erfolgt in den beiden axialen Endbereichen des Statorpaketes und erfolgt dort über den gesamten Umfang des Statorpaketes. Durch diese mechanische Bearbeitung wird die Jochdicke des Rückschlussringes des Stators in den genannten axialen Endbereichen reduziert. Dies hat zur Folge, dass im Betrieb des Einbaumotors die magnetische Sättigung in diesen Bereichen mit reduzierter Jochdicke erhöht ist. Dadurch werden unerwünschte Effekte hervorgerufen wie beispielsweise erhöhte Drehmomentwelligkeiten.

Des Weiteren ist es bereits bekannt, eine Fixierung eines in ein Gehäuse eingesetzten Einbaumotors über einen Pressverband zwischen dem Statoraußenmantel und der Gehäusebohrung herbeizuführen. Bei einem derartigen Pressverband zwischen dem Stator und der Gehäusebohrung wirken verformende Kräfte auf das Statorpaket ein, welche die elektromagnetischen Eigenschaften des Einbaumotors negativ beeinflussen.

Ferner ist es bereits bekannt, eine Fixierung eines in ein Gehäuse eingesetzten Einbaumotors durch die Verwendung eines am Außenumfang des Einbaumotors vorgesehenen Toleranzringes herbeizuführen.

Des Weiteren wurde bereits vorgeschlagen, eine radiale Fixierung eines in ein Gehäuse eingesetzten Einbaumotors unter Verwendung eines Lagerschildes vorzunehmen, welches an seinem Außenumfang federnde Haltelaschen aufweist.

Aus der DE 103 26 074 A1 ist bereits ein elektromotorischer Antrieb bekannt, der insbesondere für eine Pumpe einer elektrohydraulischen Fahrzeuglenkvorrichtung vorgesehen ist. Dieser bekannte Antrieb ist mit einer Motorhalterung versehen, welche einen zylindrischen Zapfen aufweist. Weiterhin sind ein Antriebswicklungen aufweisender Stator und ein als Außenläufer realisierter Rotor vorgesehen. Der Stator wird von dem zylindrischen Zapfen der Motorhalterung durchgriffen und von diesem gehalten. Zwischen der Innenwandung des Stators und der Außenwandung des zylindrischen Zapfens der Motorhalterung ist ein Toleranzring derart angeordnet, dass eine Drehmomentübertragung zwischen Stator und Motorhalterung über den Toleranzring erfolgt. Dadurch ergibt sich eine konzentrische Lagerung des Stators bezüglich des zylindrischen Zapfens der Motorhalterung in jedem Betriebszustand des Antriebes und über einen weiten Temperaturbereich von etwa -40°C bis +120°C. Aufgrund dieser konzentrischen Lagerung werden störende geräuscherzeugende Schwingungen des Systems Stator/Motorhalterung verringert.

Die Aufgabe der Erfindung besteht darin, einen Einbaumotor anzugeben, bei dem die magnetische Sättigung in den axialen Endbereichen des Statorpaketes nicht erhöht ist.

Diese Aufgabe wird durch einen Hohlwelleneinbaumotor mit den im Anspruch 1 angegebenen Merkmalen gelöst. Vorteilhafte Ausgestaltungen und Weiterbildungen der Erfindung sind in den abhängigen Ansprüchen 2 - 15 angegeben.

Die Vorteile der Erfindung bestehen insbesondere darin, dass es keiner mechanischen Bearbeitung der axialen Endbereiche des Statorpaketes bedarf und dass aufgrund dessen der Außendurchmesser des Statorpaketes und damit die Jochdicke des Rückschlussringes in Axialrichtung nicht reduziert werden muss. Folglich tritt in diesen axialen Endbereichen des Statorpaketes keine Erhöhung der magnetischen Sättigung auf. Dadurch werden unerwünschte Effekte wie beispielsweise Drehmomentwelligkeiten vermieden. Der Statoraußendurchmesser kann maximal dem begrenzenden Gehäusebohrungsdurchmesser entsprechen, da die Schnittstellen Lagerschild/Stator nicht mehr in radialer Richtung aufbauen. Der zur Verfügung stehende Bauraum kann fast vollständig zur Leistungserzeugung genutzt werden.

Vorzugsweise ist der Außendurchmesser des Stators in Axialrichtung konstant. Dies begünstigt ein passgerechtes Einsetzen des Hohlwelleneinbaumotors in die Bohrung eines Gehäuses.

Gemäß einer Ausführungsform weist der Stator mehrere in Um-, fangsrichtung des Stators voneinander beabstandete, in Axialrichtung verlaufende Nuten auf, die am Außenmantel des Stators vorgesehen sind. Derartige Nuten sind in einfacher Weise im Rahmen des Stanzvorganges der Einzelbleche, aus denen das Statorpaket zusammengesetzt wird, herstellbar. Des Weiteren ist ein Einsetzen der Fortsätze der Lagerschilde in diese Nuten in einfacher Weise möglich. Die Gefahr einer Beschädigung des Stators ist dabei gering. Erstrecken sich die Nuten jeweils über die gesamte axiale Länge des Statorpaketes, dann können Lagerschilde mit Fortsätzen unterschiedlicher Länge am Statorpaket befestigt werden. Erstrecken sich die Nuten hingegen jeweils nur über einen kleinen Teil der axialen Länge des Statorpaketes, dann kann erreicht werden, dass der Außendurchmesser des Stators sowohl in Axialrichtung als auch in Radialrichtung konstant ist.

Sind gemäß einer anderen Ausführungsform der Erfindung im Stator mehrere in die Stirnseiten des Stators eingebrachte Bohrungen vorgesehen, in welche jeweils ein Fortsatz eines Lagerschildes eingreift, dann kann in vorteilhafter Weise der Außendurchmesser des Stators ebenfalls sowohl in Axialrichtung als auch in Radialrichtung konstant sein.

Stimmt der Außendurchmesser der Fortsätze in Umfangsrichtung des Stators mit dem Außendurchmesser des Stators überein oder ist der Außendurchmesser der Fortsätze in Umfangsrichtung des Stators kleiner als der Außendurchmesser des Stators, dann kann sichergestellt werden, dass der Stator mit dem Innendurchmesser des Gehäuses, in welches der Stator eingesetzt ist, in Kontakt gebracht werden kann. Bestehen sowohl das Statorpaket als auch das den Stator umgebende Gehäuse aus einem wärmeleitfähigen Material, dann kann aufgrund des Kontaktes zwischen dem Statorpaket und dem Gehäuse im Betrieb im Stator gebildete Wärme über das Gehäuse abgeführt werden.

Eine Verschweißung der in Axialrichtung verlaufenden Flanken der Fortsätze mit dem Stator hat den Vorteil einer verbesserten Befestigung der Lagerschilde am Stator.

Sind - wie es im Anspruch 9 angegeben ist - die im Stator vorgesehenen Nuten oder Bohrungen jeweils in radialer Verlängerung der Zahnmitte eines Statorzahnes vorgesehen, dann werden die elektromagnetischen Eigenschaften des Hohlwelleneinbaumotors nicht in negativer Weise beeinflusst.

Die Anzahl der Nuten oder Bohrungen kann in Abhängigkeit vom jeweils vorliegenden Anwendungsfall kleiner oder gleich der Anzahl der Zähne gewählt werden. Genügt beim vorliegenden Einzelfall eine kleine Anzahl von Fortsätzen der Lagerschilde zur sicheren Befestigung der Lagerschilde am Stator, dann kann die Anzahl der Nuten oder Bohrungen im Stator entsprechend klein gewählt werden. Bedarf es hingegen beim vorliegenden Einzelfall einer großen Anzahl von Fortsätzen der Lagerschilde zur sicheren Befestigung der Lagerschilde am Stator, dann wird die Anzahl der Nuten oder Bohrungen im Stator entsprechend groß gewählt.

Zur Verbesserung der Befestigung des Hohlwelleneinbaumotors in der Bohrung eines Gehäuses wird in vorteilhafter Weise ein Federelement verwendet, welches eines der Lagerschilde oder beide Lagerschilde umgibt. Bei diesem Federelement kann es sich um einen Toleranzring handeln, der aus Federstahl besteht. Der Hohlwelleneinbaumotor wird samt des aufgesetzten Toleranzringes in axialer Richtung in die Bohrung des Gehäuses eingeschoben. Im eingeschobenen Zustand steht der Toleranzring in einem Pressverband mit dem Innenmantel der Bohrung des Gehäuses, so dass der Hohlwelleneinbaumotor innerhalb dieser Bohrung konzentrisch gelagert ist.

Vorzugsweise ist der Außendurchmesser des Toleranzringes bzw. der Toleranzringe nur minimal größer als der Außendurchmesser des Statorpaketes, so dass der Außenmantel des Statorpaketes ebenfalls mit dem Innenmantel der Bohrung des Gehäuses kontaktiert ist. Dadurch ist die bereits oben genannte Wärmeabführung vom Stator über das Gehäuse auch bei Verwendung eines oder zweier Toleranzringe sichergestellt.

Eine Weiterbildung besteht darin, den Toleranzring in Axialrichtung abgestuft auszubilden.

Dies hat den Vorteil, dass der Hohlwelleneinbaumotor beim Einsetzen in die Bohrung des Gehäuses bis zu einem Anschlag des Gehäuses eingeschoben werden kann und dass durch die federnde Wirkung des abgestuften Toleranzringes in axialer Richtung ein Toleranzausgleich gewährleistet wird. Somit kann bei Verwendung eines Lagerschildes mit Anschraubflansch und abgewinkeltem Toleranzring der Motor auch axial vorgespannt und gesichert an einer gewünschten axialen Position im Gehäuse eingebaut werden.

Die Befestigung, inklusive Verdrehsicherung, des Hohlwelleneinbaumotors im Gehäuse kann noch dadurch verbessert werden, dass das in Einschubrichtung hintere Lagerschild mit einem Anschraubflansch versehen ist, der in Radialrichtung über den Außenmantel des Stators hinausragt und Ösen aufweist, durch welche Befestigungsschrauben geführt werden, die nach dem Einsetzen des Hohlwelleneinbaumotors in die Bohrung des Gehäuses in Axialrichtung in Schraubenbohrungen des Gehäuses eingedreht werden.

Weitere vorteilhafte Eigenschaften der Erfindung ergeben sich aus deren nachfolgender beispielhafter Erläuterung anhand der Figuren. Es zeigt
- Figur 1: eine Längsschnittdarstellung eines Hohlwelleneinbaumotors gemäß einer ersten Ausführungsform der Erfindung,
- Figur 2: eine Seitenansicht eines Hohlwelleneinbaumotors gemäß der Erfindung,
- Figur 3: eine Querschnittsdarstellung eines Hohlwelleneinbaumotors,
- Figur 4: eine Querschnittsdarstellung eines Teils des Stators eines Hohlwelleneinbaumotors gemäß der Erfindung,
- Figur 5: eine Skizze zur Veranschaulichung einer zweiten Ausführungsform der Erfindung,
- Figur 6: eine Querschnittsdarstellung eines Teils des Stators eines Hohlwelleneinbaumotors gemäß einer anderen Ausführungsform der Erfindung und
- Figur 7: Skizzen zur Veranschaulichung alternativer Ausführungen eines Toleranzringes.

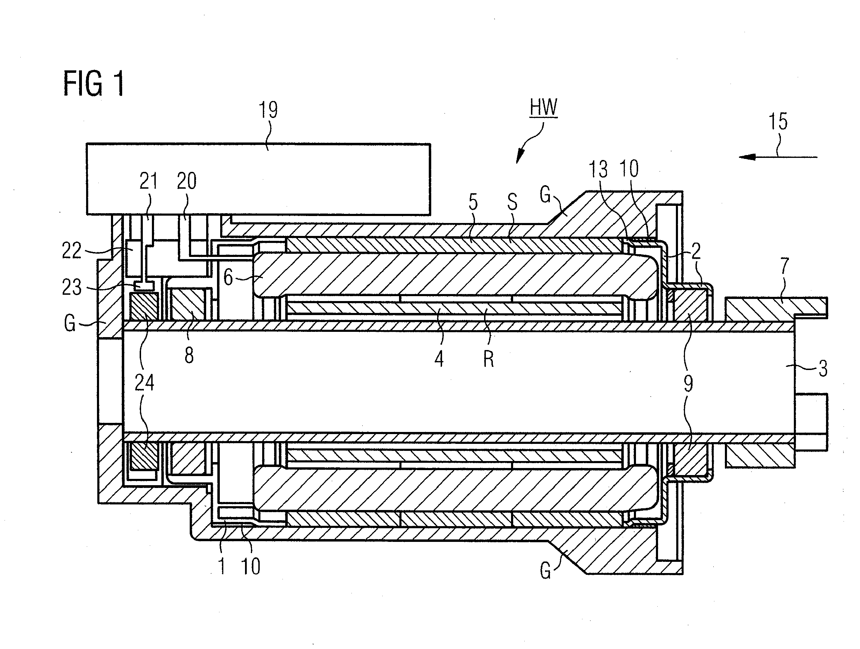

Die Figur 1 zeigt,eine Längsschnittdarstellung eines Hohlwelleneinbaumotors gemäß einer ersten Ausführungsform der Erfindung.

Der dargestellte Hohlwelleneinbaumotor HW weist einen Stator S, einen Rotor R sowie Lagerschilde 1 und 2 auf. Das Lagerschild 2 ist von einem Federelement 10 umgeben, bei dem es sich um einen aus Federstahl bestehenden Toleranzring handelt. Der Rotor R ist innerhalb des Stators S relativ zu diesem drehbar.

Der Stator S weist ein Statorpaket 5 und eine Statorwicklung 6 auf. Das Statorpaket 5 enthält ein Statorjoch, dessen Außenmantel im Wesentlichen zylinderförmig ausgebildet ist, und weist in Radialrichtung nach innen gerichtete Statorzähne auf, um welche die Statorwicklung 6 gewickelt ist.

Der Rotor R enthält ein Rotorpaket 4, in welchem in der Nähe seines Außenmantels in Aufnahmetaschen Permanentmagnete gelagert sind, die im Betrieb des Einbaumotors mit der Statorwicklung zusammenwirken. Das Rotorpaket 4 ist drehfest mit einer Hohlwelle 3 verbunden. Die Hohlwelle 3 ist in Kugellagern 8 und 9 gelagert, die sich an den Lagerschilden 1 bzw. 2 abstützen.

Des Weiteren weist der in der Figur 1 dargestellte Hohlwelleneinbaumotor HW eine Steuereinheit 19 auf. Diese steht über einen Statorwicklungskontakt 20 mit der Statorwicklung 6 in Verbindung. Weiterhin ist die Steuereinheit 19 über einen Signalkontakt 21 mit einem auf einem Trägerelement 22 befestigten Signalgeber 23 kontaktiert. Der Signalgeber 23, bei dem es sich beispielsweise um einen Hallsensor handelt, wirkt mit einem Magnetrad 24 zusammen, welches drehfest mit der Hohlwelle 3 verbunden ist.

Der in der Figur 1 gezeigte Hohlwelleneinbaumotor HW wird in Axialrichtung 15 in eine zylindrische Bohrung eines Gehäuses G eingesetzt.

Eine konzentrische Lagerung des Einbaumotors (Stahl) in der Bohrung des Gehäuses (Aluminium) wird im Temperaturbereich von -40° bis +120°C durch Toleranzringe 10 sichergestellt, deren Außendurchmesser minimal größer gewählt ist als der Außendurchmesser des Statorpaketes. Bei in die Bohrung des Gehäuses eingesetztem Hohlwelleneinbaumotor besteht zwischen den Toleranzringen 10 und dem Innenmantel des Gehäuses ein Pressverband. Der Außenmantel des Statorpakets steht bei in die Bohrung des Gehäuses eingeschobenem Hohlwelleneinbaumotor in leichtem Kontakt mit dem Gehäuse. Sowohl das Statorpaket, welches aus gestanzten Blechlamellen besteht, als auch das Gehäuse bestehen aus einem wärmeleitfähigen Material. Dies hat den Vorteil, dass im Betrieb des Hohlwelleneinbaumotors im Stator gebildete Wärme über das Gehäuse nach außen abgeführt werden kann.

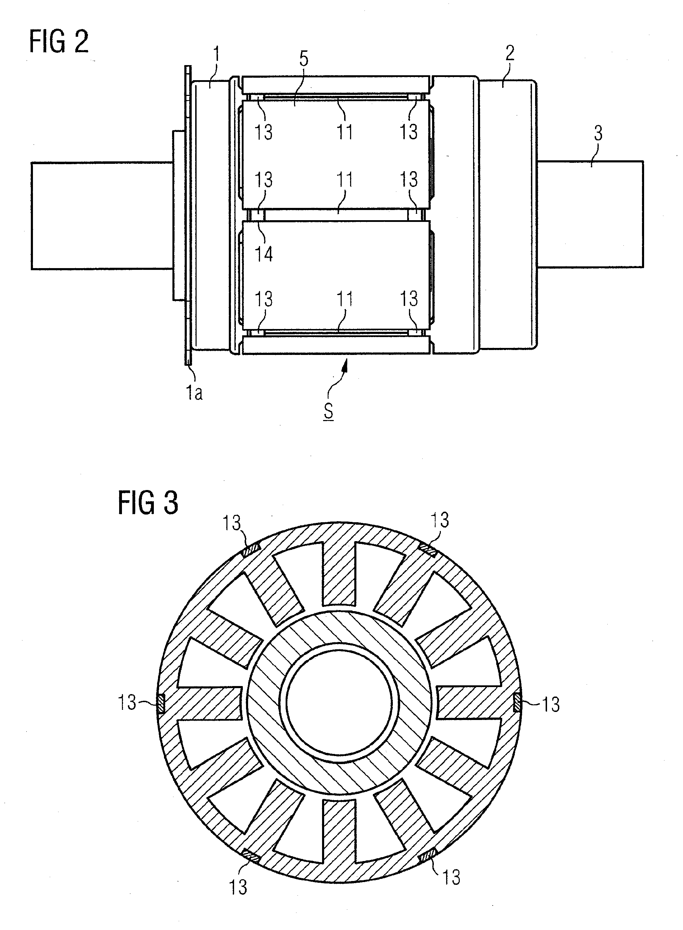

Des Weiteren weist der in der Figur 1 gezeigte Hohlwelleneinbaumotor HW - wie aus der Figur 2 ersichtlich ist - im Stator mehrere in Umfangsrichtung des Stators voneinander beabstandete, in Axialrichtung verlaufende Nuten 11 auf. In diese Nuten 11 greifen Fortsätze 13 der Lagerschilde 1 und 2 ein, wobei sich diese Fortsätze 13 ebenfalls in Axialrichtung erstrecken.

Die genannten Nuten 11 im Statorpaket, die beim gezeigten Ausführungsbeispiel am Außenmantel des Stators vorgesehen sind, erstrecken sich über die gesamte axiale Länge des Statorpaketes 5. Die Länge der Fortsätze 13 der Lagerschilde 1 und 2 ist derart gewählt, dass sie sich zwar nur über einen kleinen Teil der axialen Länge des Statorpaketes 5 erstreckt, aber zu einer sicheren Befestigung der Lagerschilde 1 und 2 am Stator ausreicht. Die Befestigung der Fortsätze 13 am Statorpaket wird in vorteilhafter Weise dadurch verbessert, dass die in Axialrichtung verlaufenden Flanken der Fortsätze 13 mit dem Stator verschweißt werden.

In der in der Figur 2 gezeigten Seitenansicht eines Hohlwelleneinbaumotors sind der Toleranzring bzw. die Toleranzringe nicht dargestellt. Alternativ zum dargestellten Ausführungsbeispiel dazu können - sofern der vorliegende Anwendungsfall dies ermöglicht - auch nur in jede zweite Nut 11 Fortsätze der Lagerschilde eingreifen.

Des Weiteren ist aus der Figur 2 ersichtlich, dass der Außendurchmesser des Stators in Axialrichtung jeweils konstant ist, d. h. in Axialrichtung nicht abgestuft ausgeführt ist. Folglich treten in den beiden axialen Endbereichen des Statorpaketes keine unerwünschten Erhöhungen der magnetischen Sättigung auf.

Die Figur 3 zeigt eine Querschnittsdarstellung eines Hohlwelleneinbaumotors gemäß einem Ausführungsbeispiel für die Erfindung. Gemäß diesem Ausführungsbeispiel sind am Außenmantel des Motors insgesamt sechs in Umfangrichtung des Stators voneinander beabstandete Nuten vorgesehen, in welche jeweils ein Fortsatz 13 eines der Lagerschilde eingreift.

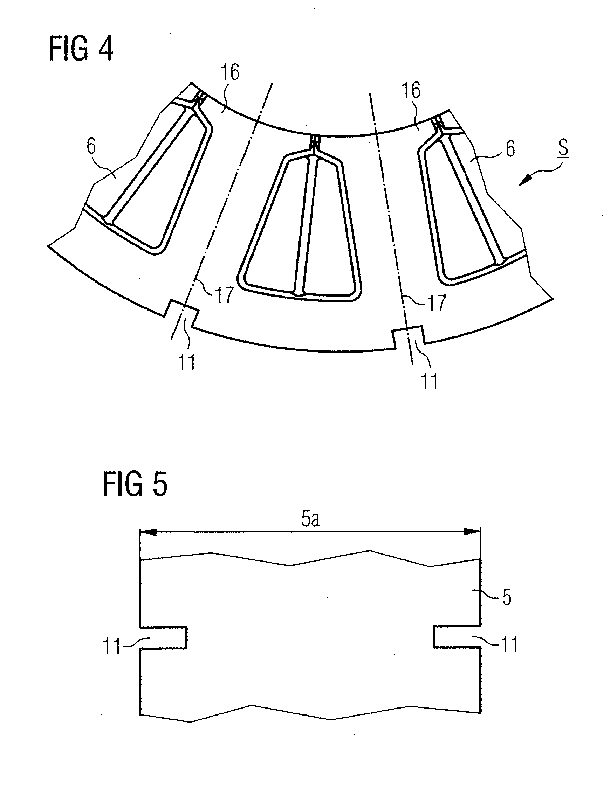

Die Figur 4 zeigt eine Querschnittsdarstellung eines Teils des Stators S eines Hohlwelleneinbaumotors gemäß der Erfindung. Aus dieser Darstellung ist ersichtlich, dass die einander benachbarten Zähne 16 jeweils von der Statorwicklung 6 umwickelt sind. Des Weiteren geht aus der Figur 4 hervor, dass die am Außenmantel des Statorpaketes vorgesehenen Nuten 11 jeweils in radialer Verlängerung der Zahnmitten 17 der Statorzähne 16 vorgesehen sind. Dies hat den Vorteil, dass die elektromagnetischen Eigenschaften des Hohlwelleneinbaumotors durch die Nuten nicht in negativer Weise beeinflusst werden, da die Bereiche, in denen sich die Nuten 11 befinden, weitestgehend frei von Feldlinien sind.

Die Figur 5 zeigt eine Skizze zur Veranschaulichung einer zweiten Ausführungsform der Erfindung. Bei dieser zweiten Ausführungsform erstrecken sich die Nuten 11 jeweils nur über einen kleinen Teil der axialen Länge 5a des Statorpaketes 5. In diese Nuten 11 greifen Fortsätze der Lagerschilde ein, wobei die Länge dieser Fortsätze an die Länge der Nuten angepasst ist. Vorzugweise ist der Außendurchmesser dieser Fortsätze derart gewählt, dass er mit dem Außendurchmesser des Statorpaketes übereinstimmt. Bei dieser Ausführungsform ist der Außendurchmesser des Stators sowohl in Axialrichtung als auch in Umfangsrichtung jeweils konstant.

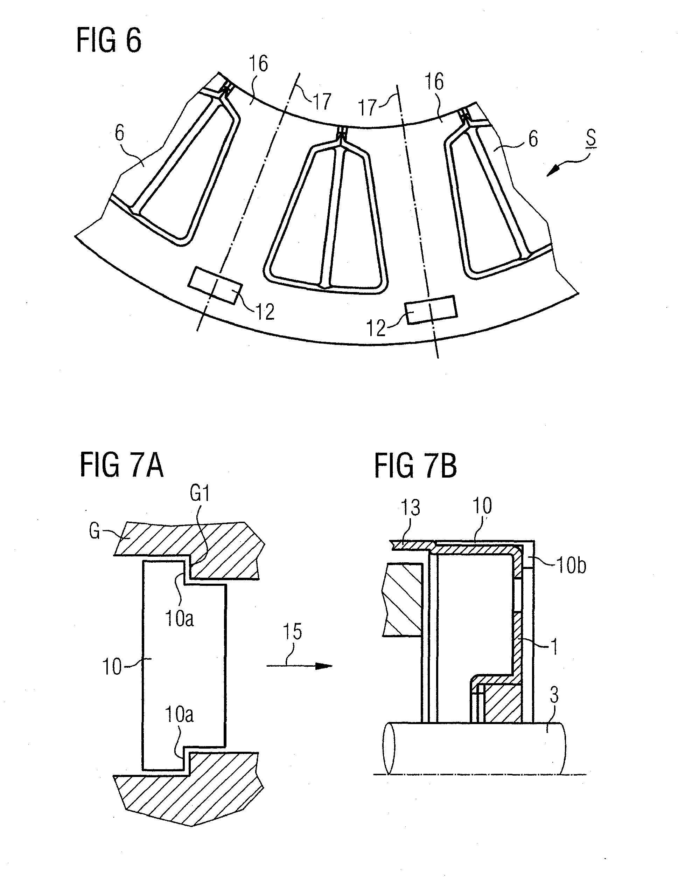

Die Figur 6 zeigt eine Querschnittsdarstellung eines Teils eines Stators eines Hohlwelleneinbaumotors gemäß einer anderen Ausführungsform der Erfindung. Dieser Stator weist anstelle der oben gezeigten Nuten 11 in die Stirnseiten des Statorpaketes eingebrachte Bohrungen 12 auf, in welche die Fortsätze der Lagerschilde eingreifen. Diese Bohrungen 12 sind ebenso wie die in der Figur 4 gezeigten Nuten 11 jeweils in radialer Verlängerung der Zahnmitten 17 der Statorzähne 16 vorgesehen. Auch dabei wird der Vorteil erreicht, dass die elektromagnetischen Eigenschaften des Hohlwelleneinbaumotors durch die Bohrungen 12 nicht in negativer Weise beeinflusst werden, da die Bereiche, in denen sich die Bohrungen 12 befinden, weitestgehend frei von Feldlinien sind. Des Weiteren ist auch bei dieser Ausführungsform der Außendurchmesser des Stators sowohl in Axialrichtung als auch in Radialrichtung jeweils konstant.

Die Figur 7a zeigt eine Skizze zur Veranschaulichung einer alternativen Ausführungsform eines Toleranzringes. Gemäß dieser alternativen Ausführungsform ist der Toleranzring 10 in Axialrichtung mit einer Stufe 10a versehen. Ist dieser Toleranzring 10 um das Lagerschild 1 gelegt und wird der Hohlwelleneinbaumotor mit diesem alternativ gestalteten Toleranzring in Axialrichtung 15 in das Gehäuse eingesetzt, dann kann dieses Einsetzen bis zu einer am Innenmantel des Gehäuses G vorgesehenen Stufe G1 erfolgen, welche einen Anschlag für die Stufe 10a des Toleranzringes 10 bildet. Auf diese Weise kann sichergestellt werden, dass der Hohlwelleneinbaumotor innerhalb des Gehäuses sowohl die gewünschte zentrische Lagerung aufweist als auch in axialer Richtung an der jeweils gewünschten Position gelagert ist.

Die Figur 7b zeigt eine Skizze zur Veranschaulichung einer weiteren alternativen Ausführungsform. Bei dieser weist der Toleranzring 10 eine Umbiegung 10b auf, die das Lagerschild 1 umfasst.

Bei einem Hohlwelleneinbaumotor.gemäß der vorliegenden Erfindung handelt es sich in vorteilhafter Weise um eine abgeschlossene, im Hinblick auf ihre Eigenschaften und Funktionsweise vorprüfbare Einheit. Dies hat den Vorteil, dass ein Hohlwelleneinbaumotor gemäß der Erfindung bereits beim Motorhersteller einer Funktionsprüfung unterzogen werden kann und dass die Möglichkeit besteht, den Hohlwelleneinbaumotor erst nach erfolgter Funktionsprüfung an die Kunden des Motorherstellers auszuliefern. Diese können dann den vorgeprüften Hohlwelleneinbaumotor in ein beliebiges Gehäuse einsetzen.

## Patentansprüche

1. Hohlwelleneinbaumotor (HW), welcher einen Stator (S)und einen Rotor (R) aufweist, wobei der Rotor innerhalb.des Stators drehbar zu diesem angeordnet ist, und welcher in seinen beiden axialen Endbereichen jeweils mit einem am Stator befestigten Lagerschild (1,2) versehen ist,
**dadurch gekennzeichnet,**
**dass**
- im Stator (S) mehrere in Umfangsrichtung des Stators voneinander beabstandete, in Axialrichtung (15) verlaufende Nuten (11) oder Bohrungen (12) vorgesehen sind,
- die Lagerschilde (1,2) jeweils in Axialrichtung verlaufende Fortsätze (13) aufweisen und
- die Fortsätze (13) der Lagerschilde (1,2) in die Nuten (11) oder Bohrungen (12) des Stators eingreifen.

2. Hohlwelleneinbaumotor nach Anspruch 1,
**dadurch gekennzeichnet,**
**dass** die Nuten (11) am Außenmantel des Stators vorgesehen sind.

3. Hohlwelleneinbaumotor nach Anspruch 2,
**dadurch gekennzeichnet,**
**dass** die Nuten sich jeweils über die gesamte axiale Länge (5a) des Statorpaketes (5) erstrecken.

4. Hohlwelleneinbaumotor nach Anspruch 2,
**dadurch gekennzeichnet,**
**dass** die Nuten (11) sich jeweils über einen kleinen Teil der axialen Länge (5a) des Statorpaketes erstrecken.

5. Hohlwelleneinbaumotor nach Anspruch 1,
**dadurch gekennzeichnet,**
**dass** die Bohrungen (12) in die Stirnseiten des Statorpaketes eingebracht sind.

6. Hohlwelleneinbaumotor nach einem der vorhergehenden Ansprüche,
**dadurch gekennzeichnet,**
**dass** der Außendurchmesser des Stators in Axialrichtung konstant ist.

7. Hohlwelleneinbaumotor nach einem der vorhergehenden Ansprüche,
**dadurch gekennzeichnet,**
**dass** der Außendurchmesser der Fortsätze in Umfangsrichtung des Stators mit dem Außendurchmesser des Stators übereinstimmt oder kleiner ist als der Außendurchmesser des Stators.

8. Hohlwelleneinbaumotor nach einem der vorhergehenden Ansprüche,
**dadurch gekennzeichnet,**
**dass** die in Axialrichtung verlaufenden Flanken der Fortsätze (13) mit dem Stator verschweißt sind.

9. Hohlwelleneinbaumotor nach einem der vorhergehenden Ansprüche,
**dadurch gekennzeichnet,**
**dass** der Stator mit einer Vielzahl von Statorzähnen versehen ist und die Nuten (11) oder Bohrungen (12) jeweils in radialer Verlängerung der Zahnmitten eines Statorzahnes vorgesehen sind.

10. Hohlwelleneinbaumotor nach einem der vorhergehenden Ansprüche,
**dadurch gekennzeichnet,**
**dass** die Anzahl der Nuten oder Bohrungen kleiner oder gleich der Anzahl der Zähne ist.

11. Hohlwelleneinbaumotor nach Anspruch 10,
**dadurch gekennzeichnet,**
**dass** die Anzahl der Nuten der Hälfte der Anzahl der Zähne entspricht.

12. Hohlwelleneinbaumotor nach einem der vorhergehenden Ansprüche,
**dadurch gekennzeichnet,**
**dass** zumindest eines der Lagerschilde von einem Federelement (10) umgeben ist.

13. Hohlwelleneinbaumotor nach Anspruch 12,
**dadurch gekennzeichnet,**
**dass** das Federelement ein Toleranzring ist.

14. Hohlwelleneinbaumotor nach Anspruch 13,
**dadurch gekennzeichnet,**
**dass** der Toleranzring aus Federstahl besteht.

15. Hohlwelleneinbaumotor nach Anspruch 13 oder 14,
**dadurch gekennzeichnet,**
**dass** der Toleranzring in Axialrichtung abgestuft ausgebildet ist.
